# FASCICULE DE BREVET EUROPEEN

(11) **EP 0 615 904 B1**
(45) Date de publication et mention de la délivrance du brevet: **17.06.1998**
(21) Numéro de dépôt: 94400508.1
(22) Date de dépôt: 08.03.1994
(51) Int. Cl.: B64C 27/51, F16F 1/50

(54) **Tête de rotor pour giravion**
Rotorkopf eines Drehflügelflugzeuges
Rotorcraft rotor head

(30) Priorité: 18.03.1993 FR 9303163
(43) Date de publication de la demande: 21.09.1994
(73) Titulaire: EUROCOPTER, F-13725 Marignane Cédex (FR)
(72) Inventeur: Aubry, Jacques Antoine, F-13480 Cabries (FR)
(74) Mandataire: Michelet, Alain

(56) Documents cités:
- EP-A- 0 424 267
- EP-A- 0 478 444
- GB-A- 680 897
- US-A- 2 639 776

## Description

La présente invention est relative à une tête de rotor pour giravion, et plus particulièrement à une tête de rotor pour giravion comportant un moyeu auquel chaque pale de rotor est accouplée par l'intermédiaire de moyens d'articulation autorisant les oscillations angulaires de battement et l'orientation en pas de ladite pale, ainsi que notamment les mouvements de pivotement en traînée de ladite pale autour d'un centre commun fixe par rapport au corps du moyeu, chaque pale étant également associée à au moins un dispositif d'amortissement desdits mouvements de traînée, qui est monté sur la tête de rotor.

Des têtes de rotor de ce type ont déjà été décrites notamment dans la demande de brevet FR-90.11950 (FR-A-2 667 293/EP-A-0 478 444) au nom de la demanderesse. Ce document fait en effet état d'une tête de rotor pour giravion, comportant un moyeu auquel chaque pale de rotor est accouplée, éventuellement par l'intermédiaire d'une pièce d'attache, par une butée lamifiée sphérique, qui autorise les oscillations angulaires de battement, et l'orientation en pas de ladite pale, ainsi que notamment ses mouvements alternés de traînée autour d'un centre commun tournant avec les pales du rotor autour de l'axe dudit rotor, et fixe par rapport au corps du moyeu. Dans ce type de tête de rotor, la pale est également associée à un dispositif d'amortissement de ses mouvements de traînée, qui est monté entre la pale et le moyeu, et qui est du type comportant deux organes aptes à pivoter relativement l'un par rapport à l'autre autour d'un axe commun. Les mouvements relatifs desdits organes sont amortis soit hydro-élastiquement, soit viscoélastiquement. Les modes de réalisation décrits dans cette demande se rapportent à des organes qui sont amortis hydro-élastiquement.

Le but de la présente invention est de proposer dans ce type de rotor de giravion dés modes de réalisation de dispositif d'amortissement viscoélastique, qui dans un encombrement similaire, permettent d'éviter tous les problèmes entraînés par la présence d'un fluide, comme c'est le cas des dispositifs hydrauliques.

Selon l'invention, la tête de rotor pour giravion comporte un moyeu auquel chaque pale est raccordée par l'intermédiaire d'une pièce d'attache et d'une butée lamifiée sphérique. Un dispositif rotatif d'amortissement en traînée du type viscoélastique est disposé entre la pièce d'attache et le moyeu et relié à la pièce d'attache (selon la revendication 2) ou au moyeu (selon la revendication 1), de manière que le dispositif d'amortissement soit articulé sur le moyeu autour d'un axe permettant son pivotement dû au battement de la pale. Le dispositif d'amortissement comporte une pièce de liaison reliée au moyeu (selon la revendication 2) ou à la pièce d'attache (selon la revendication 1) par une rotule dans laquelle ladite pièce de liaison est apte à se translater. L'amortisseur viscoélastique rotatif est constitué par un empilement alterné d'au moins deux flasques métalliques, et d'au moins une couche fixée aux flasques par vulcanisation ou collage d'un matériau viscoélastique à grande raideur et à rémanence élevée pour les déformations, chacun des flasques étant relié à la pièce d'attache par ladite pièce de liaison ou au moyeu (selon la revendication 1) ou (selon la revendication 2) rélié au moyeu par ladite pièce de liaison ou à la pièce d'attache.

Avantageusement, l'amortisseur viscoélastique rotatif est en forme de couronne plate insérée entre les deux plaques de la pièce d'attache, et il comporte cinq flasques métalliques et quatre couches viscoélastiques, les deux flasques externes et le flasque central étant reliés à la pièce d'attache, et les deux flasques intermédiaires étant reliés au moyeu.

Selon un mode de réalisation de l'invention, l'amortisseur viscoélastique rotatif a:
- les deux flasques externes et le flasque central, qui sont solidarisés à la pièce de liaison, la pièce de liaison est reliée à la pièce d'attache par une rotule dans laquelle ladite pièce de liaison est apte à se translater;
- les deux flasques intermédiaires, qui sont articulés sur le moyeu, sur lequel ils sont montés, par l'intermédiaire d'une liaison de pivotement autour d'un axe fixe par rapport audit moyeu, ledit axe de pivotement étant perpendiculaire à l'axe de l'amortisseur viscoélastique rotatif, c'est-à-dire à l'axe de pivotement relatif desdits flasques intermédiaires par rapport aux flasques externes et central, cette liaison de pivotement s'effectuant au moyen d'une pièce pivot solidaire des deux flasques intermédiaires.

Dans ce mode de réalisation, il est intéressant que les flasques métalliques et les couches viscoélastiques aient une forme générale d'anneau.

Plus particulièrement la pièce de liaison comporte:
- à une de ses extrémités, une tige apte à coulisser dans un alésage complémentaire aménagé dans la rotule montée dans la pièce d'attache; et
- à l'autre extrémité une embase ayant un logement central dimensionné pour recevoir une protubérance aménagée sur le flasque central, les deux flasques externes étant munis d'une protubérance semblable venant s'appliquer sur chacun des côtés correspondants de l'embase, de manière que cette embase puisse être solidarisée avec le flasque central et les deux flasques externes.

Dans cette architecture, la pièce de liaison est solidarisée avec le flasque central et les flasques externes au moyen de deux boulons, qui s'engagent dans des alésages aménagés dans l'embase de la pièce de liaison , et dans des alésages des protubérances du flasque central et des flasques externes.

Dans cette structure, la pièce pivot comporte:
- une partie centrale munie à chacune de ses extrémités d'un palier dans lequel est aménagé un alésage, les deux alésages étant alignés l'un par rapport à l'autre et ayant un axe commun qui est l'axe de pivotement;
- une oreille à chacune de ses extrémités, les deux flasques intermédiaires étant munis de deux oreilles venant s'appliquer sur chacun des côtés correspondants de l'oreille correspondante de la pièce pivot, de manière à ce que les flasques intermédiaires soient solidarisés avec la pièce pivot.

La pièce pivot est solidarisée avec les deux flasques intermédiaires au moyen de deux boulons, qui s'engagent dans des alésages aménagés dans chacune des oreilles de la pièce pivot et dans des alésages de chacune des oreilles des deux flasques intermédiaires. Le moyeu porte pour chaque pale, et par l'intermédiaire de deux oreilles dont il est muni, un arbre sur lequel est articulé autour de l'axe dudit arbre, c'est-à-dire l'axe de pivotement, la pièce pivot.

Selon un autre mode de réalisation de l'invention, l'amortisseur viscoélastique rotatif a:
- les deux flasques externes et le flasque central qui sont solidarisés aux deux plaques de la pièce d'attache,
- les deux flasques intermédiaires, qui sont reliés au moyeu par une pièce de liaison;
- ladite pièce de liaison étant articulée sur les deux flasques intermédiaires par une liaison de pivotement autour d'un axe fixe par rapport aux flasques intermédiaires, ledit axe étant perpendiculaire à l'axe de l'amortisseur viscoélastique rotatif, c'est-à-dire à l'axe de pivotement relatif desdits flasques intermédiaires par rapport aux flasques externes et central;
- ladite pièce de liaison étant reliée au moyeu par une rotule dans laquelle ladite pièce de liaison est apte à se translater. Dans ce mode de réalisation:
- les deux flasques externes et le flasque central sont constitués chacun par deux segments ayant une forme générale de segments d'anneau,
- les deux flasques intermédiaires ont une forme générale d'anneau,
- les couches viscoélastiques sont constituées chacune par deux segments ayant une forme générale de segments d'anneau. Dans cette architecture:
- les deux flasques externes et le flasque central sont solidarisés aux deux plaques de la pièce d'attache par six boulons disposés en nombre égal de part et d'autre de l'axe de pivotement, ces boulons s'engageant dans des alésages aménagés dans chacun des flasques externes et dans le flasque central, et également dans des alésages aménagés dans des entretoises disposées par groupe de deux pour chaque boulon, l'une de ces entretoises étant située entre le flasque central et l'un des flasques externes, et l'autre entretoise étant située entre le flasque central et l'autre flasque externe;
- les entretoises ayant une longueur légèrement inférieure à la distance à l'état libre entre le flasque central et le flasque externe correspondant, de manière qu'après blocage des boulons, il y ait une légère contrainte des couches viscoélastiques.

Plus particulièrement, la pièce de liaison est un étrier:
- dont les deux branches entourent en partie l'amortisseur viscoélastique rotatif, et dont les extrémités desdites branches sont articulées autour de l'axe de pivotement;
- dont l'embase porte une tige apte à coulisser dans un alésage complémentaire aménagé dans la rotule montée dans le moyeu.

De plus, l'étrier comporte à chacune des extrémités des branches une rotule dans laquelle est montée une articulation, de façon à permettre un léger déboîtement des branches par rapport à leur axe de pivotement, pour accompagner les mouvements de pas de la pièce d'attache de la pale. Chaque axe de pivotement de la branche de l'étrier est constitué par un boulon, sur lequel est montée la rotule correspondante, ledit boulon étant monté dans un support disposé entre les deux flasques intermédiaires et fixé sur ces deux flasques intermédiaires par deux boulons.

L'invention présente ainsi l'avantage de proposer des types d'architecture dans lesquels l'amortisseur rotatif est du type viscoélastique, qui sont d'un encombrement réduit, et qui ne nécessitent pas d'entretien particulier.

La description qui va suivre est purement illustrative et non limitative. Elle doit être lue en regard des dessins annexés.

Sur ces dessins:
La Figure 1 est une vue en coupe schématique avec arrachement partiel du moyeu d'une tête de rotor conforme à l'invention et d'une pièce d'attache d'une pale associée audit moyeu.
La Figure 2 est une vue selon le plan II-II de la Figure 1.
La Figure 3 est une vue en perspective cavalière de la pièce pivot selon l'invention.
La Figure 4 est une vue suivant le plan IV-IV de la Figure 1.
La Figure 5 est une vue en coupe suivant le plan V-V de la Figure 1.
La Figure 6 est une vue en coupe semblable à la Figure 1 d'une tête de rotor conforme à un deuxième mode de réalisation de l'invention.
La Figure 7 est une vue en coupe suivant le plan VII-VII de la Figure 6.
La Figure 8 est une vue à grande échelle d'un détail de la Figure 7.
La Figure 9 est une vue partielle à grande échelle de la Figure 6.
La Figure 10 est une vue en coupe suivant le plan X-X de la Figure 8.
La Figure 11 est une vue en coupe suivant le plan XI-XI de la Figure 8.
La Figure 12 est une vue en coupe suivant le plan XII-XII de la Figure 8.
La Figure 13 illustre schématiquement la cinématique de l'amortisseur des mouvements de traînée de la pièce d'attache des Figures 1 à 5, dans un plan tournant avec le rotor de giravion.
La Figure 14 illustre schématiquement, dans un plan tournant avec le rotor de giravion autour de l'axe dudit rotor, et passant par ledit axe, la cinématique des mouvements de battement de la même pièce d'attache.
La Figure 15 illustre schématiquement la cinématique d'amortissement des mouvements en traînée de la pièce d'attache des Figures 6 à 12, dans un plan tournant avec le rotor de giravion autour de son axe.
La Figure 16 illustre schématiquement la cinématique des mouvements de battement de la même pièce d'attache, dans un plan tournant avec le rotor de giravion autour de l'axe dudit rotor, et passant par ledit axe.

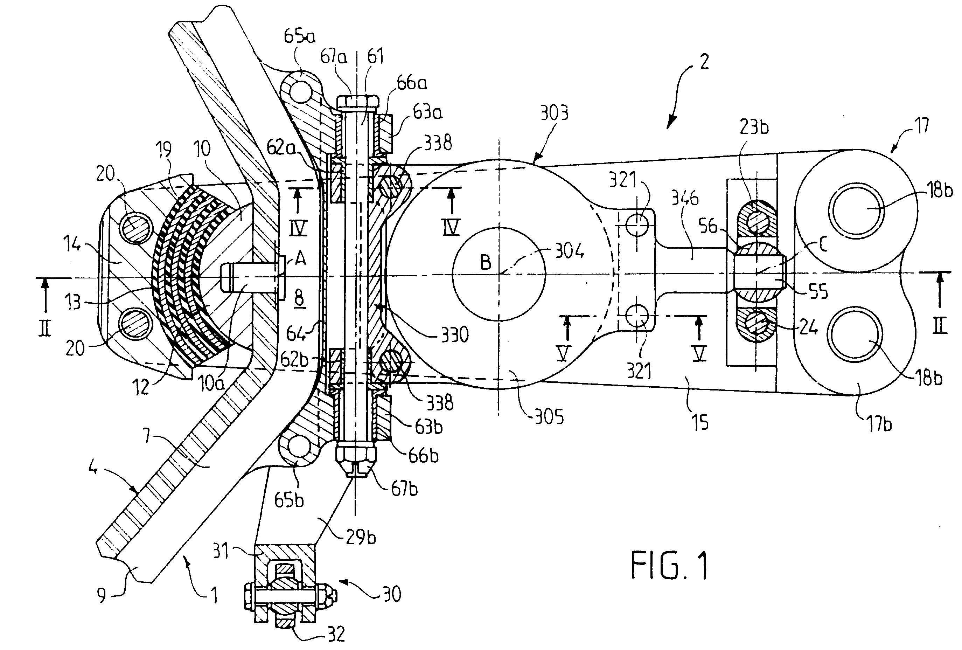

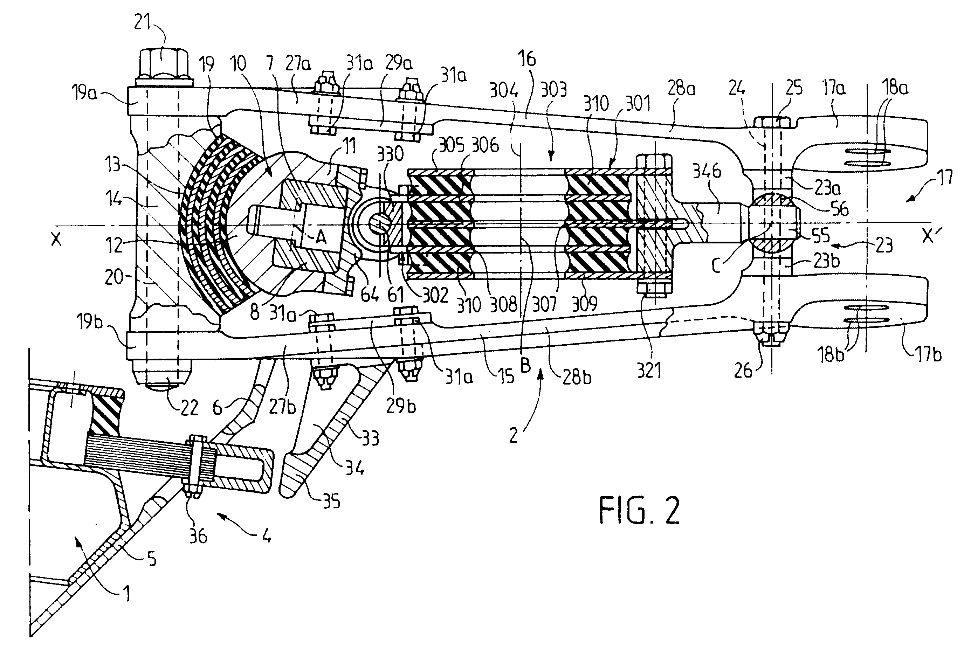

En se référant plus particulièrement aux Figures 1 et 2, on voit qu'une tête de rotor conforme à un premier mode de réalisation de l'invention comporte essentiellement un moyeu 1, constitué par la partie supérieure d'un mât-moyeu tubulaire intégré sur lequel sont articulées en battement, pas et traînée, des pièces 2 d'attache aux pales (non représentées). Chaque pièce d'attache 2 est associée à un dispositif d'amortissement 303 monté fonctionnellement entre ledit moyeu 1 et ladite pièce d'attache 2 et destiné à amortir les mouvements de traînée de ladite pièce d'attache 2 et de la pale qui lui est associée.

La partie mât (non représentée) dudit moyeu 1 est prolongée coaxialement par un corps tubulaire de moyeu 4 qui s'évase à partir dudit mât, d'une part, par une première partie tronconique 5, et, d'autre part, par une deuxième partie tronconique 6 prolongeant ladite première partie 5 à partir de sa périphérie la plus évasée, avec un angle de conicité inférieur. Cette deuxième partie tronconique 6 porte une ceinture 7 qui l'entoure annulairement à sa périphérie extrême. Le plan médian de ladite ceinture 7 est sensiblement perpendiculaire à l'axe du rotor et du moyeu 1. Le contour délimité dans ledit plan par ladite ceinture 7 est un polygone pseudo-régulier, à sommets arrondis et à petits côtés 8 égaux et rectilignes alternant avec des grands côtés 9 égaux et rectilignes, le nombre de petits côtés 8 étant égal au nombre de grands côtés 9 et au nombre de pales du rotor. Les petits et grands côtés 8 et 9 admettent une même section droite en forme de U dont le fond est du côté de l'axe du rotor et dont les branches s'étendent vers l'extérieur dudit rotor, chacun des côtés 8 ou 9 étant tangent par son fond en sa partie milieu à la partie tronconique supérieure 6.

Sur chacun des petits côtés 8 de la ceinture 7 est emboîté un étrier 10, ayant une section droite en forme de U, délimité par deux branches 11 et un fond 12 épousant sensiblement respectivement les surfaces externes des branches et du fond du petit côté 8 de la ceinture 7 auquel il est associé, ledit étrier étant maintenu sur ledit petit côté 8 par l'intermédiaire d'une vis 10a, dont la tête s'appuie sur la face radiale externe du fond dudit petit côté et dont la tige filetée traverse ledit fond du petit côté 8 pour s'emboîter dans un alésage complémentaire dont est muni le fond 12 et avec le filetage duquel coopère le filetage de la vis 10a. La surface radiale interne de ce fond 12 est une portion de sphère, dont le centre fictif se trouve sur la partie médiane du petit côté 8, à égale distance des grands côtés 9 qui prolongent ledit petit côté 8 et sensiblement au milieu de son épaisseur. Un tel étrier 10 constitue l'armature radiale externe d'une butée lamifiée sphérique 13, qui sert, de façon désormais classique, d'articulation de battement, pas et traînée ainsi que de moyen de retenue à l'encontre des forces centrifuges pour la pièce d'attache 2 et la pale qui lui sont associées. Cette butée lamifiée sphérique 13 comporte essentiellement une partie centrale lamifiée constituée d'un empilement de couches en forme de calottes sphériques alternativement rigides, par exemple métalliques, et en un matériau élastique, tel qu'un caoutchouc synthétique, par exemple en élastomère de silicone, cette partie centrale lamifiée étant vulcanisée entre deux armatures rigides, par exemple métalliques, dont l'une est le fond 12 et dont l'autre est une armature interne 14, solidarisée à la pièce d'attache 2.

Cette pièce d'attache 2, est constituée quant à elle essentiellement par deux plaques 15 et 16 rigides, sensiblement identiques et disposées l'une en regard de l'autre symétriquement par rapport au plan de la pale qui lui est associé, ainsi que par rapport à l'axe de celle-ci, lesdites plaques 15 et 16 s'étendant le long dudit axe. Ces deux plaques 15 et 16 définissent entre elles, à leur extrémité la plus éloignée de l'axe du rotor, une chape 17 destinée à recevoir le pied de ladite pale. Ce pied de pale est retenu entre les deux branches 17a et 17b de cette chape 17 par deux broches (non représentées) traversant perpendiculairement ladite pale ainsi que lesdites branches 17a et 17b au niveau d'orifices 18a et 18b ménagés pour les recevoir. Ces deux plaques 15 et 16 s'étendent à partir des branches 17a et 17b définissant ladite chape 17 sensiblement en s'écartant l'une de l'autre jusqu'à l'armature interne 14 de la butée lamifiée sphérique 13 qui leur sert d'entretoise à leur extrémité opposée au pied de la pale. Chacune de ces deux plaques 15 et 16 a un contour sensiblement trapézoïdal isocèle allongé dont la grande base est au niveau de l'extrémité libre de la chape 17, sa petite base étant disposée à l'autre extrémité de ladite pièce d'attache 2, c'est-à-dire sensiblement au niveau de l'armature interne 14. Cette dernière étant disposée à l'intérieur du corps du moyeu 4, la plaque inférieure 15 traverse ledit corps tubulaire 4 au niveau d'une ouverture ménagée à cet effet dans la partie tronconique 6 supérieure.

L'armature interne 14 a, quant à elle, une forme délimitée par deux faces identiques en contact avec les plaques 15 et 16 et sensiblement trapézoïdales isocèles reliées entre elles par des génératrices perpendiculaires aux plans médians desdites plaques 15 et 16, la petite base desdites faces coïncidant avec la petite base des plaques 15 et 16. Sur la surface de l'armature 14, qui fait face à la chape 17 à l'intérieur de ladite pièce 2, est ménagé un évidement 19 en forme de calotte sphérique qui reçoit la partie centrale de la butée lamifiée sphérique 13. Les plaques 15 et 16 sont terminées au niveau de leur surface en contact avec ladite armature interne 14 par des pattes référencées respectivement par 19b et 19a qui sont légèrement en surépaisseur vers l'intérieur de ladite pièce 2 par rapport aux parties 27a et 27b des plaques 15 et 16 qu'elles prolongent. Ces pattes 19a et 19b sont solidarisées à l'armature interne 14 par l'intermédiaire de deux boulons 20 qui traversent ladite armature interne 14 et lesdites pattes 19a et 19b perpendiculairement au plan de traînée de la pale correspondante. La tête 21 d'un boulon 20 s'appuie sur la surface externe de la plaque 16, l'extrémité filetée de la tige dudit boulon 20 débouchant en saillie sous la plaque 15 et étant associée à un écrou 22 dont le filetage coopère avec le filetage de ladite tige pour maintenir ledit écrou en appui sur la surface externe de ladite plaque 15.

Les deux plaques 15 et 16 sont également maintenues l'une par rapport à l'autre sensiblement au niveau du fond 23 de la chape 17 qui forme entretoise entre lesdites plaques. Ce fond 23 est constitué par deux épaulements 23a et 23b s'étendant chacun sensiblement perpendiculairement à la plaque 16 ou 15 à laquelle il est respectivement associé, vers l'intérieur de la pièce d'attache 2. Ces deux épaulements 23a et 23b sont maintenus l'un contre l'autre par l'intermédiaire de deux boulons 24 répartis selon une largeur des plaques 15 et 16 traversant lesdites plaques 15 et 16 et lesdits épaulements 23a et 23b. La tête 25 d'un tel boulon 24 est en appui sur la surface supérieure de la plaque 16, dans un logement de celle-ci ménagé à cet effet, l'extrémité filetée de la tige dudit boulon 24 opposée à ladite tête 25 étant associée à un écrou 26 maintenu, par coopération de son filetage avec le filetage de ladite tige, en appui sur la surface inférieure et externe de la plaque 15. Ces épaulements 23a et 23b sont portés chacun par une partie 28a et 28b des plaques 15 et 16 prolongées par les parties 27a et 27b qui portent les pattes 19a et 19b et qui sont elles-mêmes en surépaisseur vers l'intérieur de la pièce 2 par rapport aux parties 28a et 28b.

Sur chacune des parties 27a et 27b est montée une branche transversale 29a ou 29b, ces deux branches 29a et 29b portant le levier 30 de commande de pas de ladite pièce d'attache 2 et de la pale qui lui est associée. Ces deux branches 29a et 29b sont maintenues en appui sur les surfaces intérieures des parties 27a ou 27b, entre les têtes de quatre boulons 31a et les écrous qui leur sont associés, lesdits boulons traversant lesdites branches 29a et 29b ainsi que lesdites parties 27a et 27b. Ces branches 29a et 29b ont chacune un bord s'étendant sensiblement le long de la ligne de décrochement entre les parties 27a ou 27b et les parties 28a ou 28b et ont une largeur correspondant sensiblement à une demi-largeur desdites parties 27a ou 27b. Ces branches 29a et 29b définissent ensemble un demi-manchon d'une pièce avec le levier de commande de pas 30 qui est en saillie latérale d'un côté de la pièce de liaison 2, légèrement incliné vers le corps de moyeu 1, ce levier de commande de pas 30 se terminant par une chape 31 d'articulation à rotule sur l'extrémité supérieure d'une bielle de pas 32 reliée à un dispositif à plateau cyclique (non représenté). Le centre de la chape 31 se trouve sensiblement dans le plan médian de la ceinture annulaire 7 du corps de moyeu 4.

La plaque inférieure 15 de la pièce de liaison 2 est également solidaire, au niveau de sa partie 27b, d'une butée basse de battement 33 en saillie sous la face inférieure de ladite plaque 15, cette butée basse 33 ayant sensiblement une section triangulaire rectangle et étant rigidifiée par une nervure 34 s'étendant de sa base au niveau de la plaque 15 jusqu'à son extrémité opposée, l'ensemble étant d'une seule pièce avec ladite plaque 15 ou fixé sur ladite plaque 15 par l'intermédiaire des boulons 31a maintenant la branche 29 sur ladite plaque. A son extrémité inférieure, la butée basse de battement 33 est terminée par un épaulement 35 en surépaisseur destiné à coopérer avec un anneau réciproque 36 de structure connue, qui est monté autour du moyeu 1 de façon à limiter les battements des pales vers le bas.

Le dispositif d'amortissement 303 associé à la pièce d'attache 2 est du type rotatif à amortissement viscoélastique. Il comprend essentiellement deux organes 301 et 302 aptes à pivoter l'un par rapport à l'autre autour d'un axe de pivotement commun 304, et dont les mouvements relatifs sont amortis viscoélastiquement. L'organe 301, désigné par la suite par organe rotor, est relié à la pièce d'attache 2 et donc à la pale; tandis que l'organe 302, désigné par la suite par organe stator, est relié au moyeu 1.

La tête de rotor pour giravion selon l'invention comporte ainsi le moyeu auquel chaque pale est raccordée par l'intermédiaire de la pièce d'attache 2, et de la butée lamifiée sphérique 13. Le dispositif rotatif d'amortissement 303 en traînée du type viscoélastique est disposé entre la pièce d'attache 2 et le moyeu 1, de manière que le dispositif d'amortissement 303 soit articulé sur le moyeu 1 autour d'un axe 61, permettant son pivotement dû aux battements de la pale. Le dispositif d'amortissement 303 comporte une pièce de liaison 346, qui est reliée à la pièce d'attache 2 par une rotule 56, dans laquelle ladite pièce de liaison 346 est apte à se translater.

L'amortisseur viscoélastique rotatif 303 est constitué par un empilement alterné d'au moins deux flasques métalliques et d'au moins une couche fixée aux flasques par vulcanisation ou collage d'un matériau viscoélastique à grande raideur et à rémanence élevée pour les déformations. Chacun des flasques est relié au moyeu 1 ou à la pièce d'attache 2.

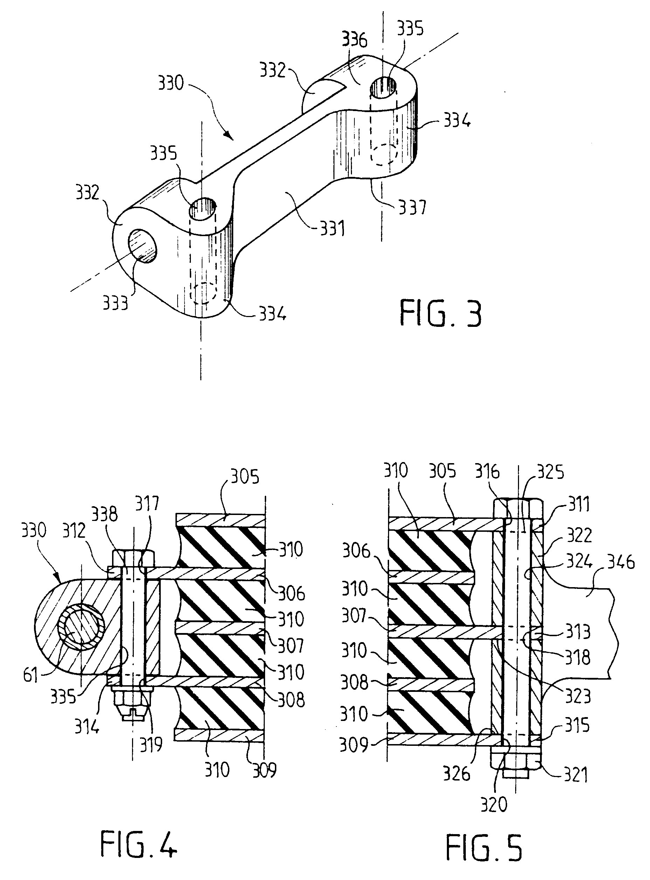

Dans la réalisation représentée sur les Figures 1 à 5, l'amortisseur viscoélastique rotatif 303 est en forme de couronne plane, qui est inséré entre les deux plaques 15 et 16 de la pièce d'attache 2. Cet amortisseur viscoélastique rotatif comporte cinq flasques métalliques, et quatre couches viscoélastiques. L'amortisseur viscoélastique rotatif 303 est ainsi constitué par deux flasques métalliques externes 305 et 309, par un flasque métallique central 307, et par deux flasques métalliques intermédiaires 306 et 308. Le flasque externe 305 est relié au flasque intermédiaire 306 par une couche viscoélastique 310, le flasque intermédiaire 306 est relié au flasque central 307 par une couche viscoélastique 310, le flasque central 307 est relié au flasque intermédiaire 308 par une couche viscoélastique 310, et le flasque intermédiaire 308 est relié au flasque externe 309 par une couche viscoélastique 310. Dans la configuration du mode de réalisation de l'invention représentée sur les Figures 1 à 5, les flasques métalliques référencés 305 à 309 et les couches viscoélastiques 310 ont une forme générale d'anneau.

Dans la structure de l'invention représentée sur les Figures 1 à 5, l'amortisseur viscoélastique rotatif a les deux flasques externes 305 et 309 et le flasque central 307 qui sont reliés à la pièce d'attache 2, c'est-à-dire à la pale, et les deux flasques intermédiaires 306 et 308 qui sont reliés au moyeu 1. Les deux flasques externes 305 et 309 ainsi que le flasque central 307 sont solidarisés à la pièce de liaison 346, qui est elle-même reliée à la pièce d'attache 2 par la rotule 56 dans laquelle la pièce de liaison 346 est apte à se translater. Les deux flasques intermédiaires 306 et 308 sont articulés sur le moyeu 1. Ces flasques intermédiaires 306 et 308 sont montés sur le moyeu 1 par l'intermédiaire d'une liaison de pivotement autour de l'axe 61 qui est fixe par rapport au moyeu 1. Cet axe 61 appelé aussi axe de pivotement est perpendiculaire à l'axe 304 de l'amortisseur viscoélastique rotatif 303, c'est-à-dire à l'axe de pivotement 304 des deux flasques intermédiaires 306 et 308 par rapport au groupe des deux flasques externes 305 et 309 et du flasque central 307. Cette liaison de pivotement s'effectue au moyen d'une pièce pivot 330, qui est solidaire des deux flasques intermédiaires 306 et 308.

Dans la réalisation de l'invention, la pièce de liaison 346 comporte à une de ses extrémités une tige 55, et à l'autre extrémité une embase 322. La tige 55 disposée à une ces extrémités est apte à coulisser dans un alésage complémentaire, qui est aménagé dans la rotule 56 montée dans la pièce d'attache 2. L'embase 322 qui est disposée à l'autre extrémité de la pièce de liaison 346 a un logement 323, qui est dimensionné pour recevoir une protubérance 313, aménagé sur le flasque central 307. De la même façon, les deux flasques externes 305 et 309 sont également munis d'une protubérance référencée respectivement 311 et 315, et qui est semblable à la protubérance 313. Ces deux protubérances 311 et 315 viennent s'appliquer respectivement sur chacun des côtés 325 et 326 de l'embase 322. On peut ainsi, de cette manière, solidariser le flasque central 307 et les deux flasques externes 305 et 309 avec l'embase 322 de la pièce de liaison 346. Pour ce faire, des alésages 324 sont aménagés dans l'embase 322 de la pièce de liaison 346, et des alésages de dimensions équivalentes référencés 318, 316 et 320 sont aménagés dans les protubérances respectives du flasque central 307 et des flasques externes 305 et 309. Ces différents alésages sont alignés les uns par rapport aux autres, de manière que la pièce de liaison 346 puisse être solidarisée avec le flasque central 307 et les flasques externes 305 et 309 au moyen de deux boulons 321 qui s'engagent dans ces différents alésages.

Comme on peut le voir plus précisément sur les Figures 1, 3 et 4, la pièce pivot 330 selon l'invention comporte une partie centrale 331, munie à chacune de ses deux extrémités d'un palier 332 et d'une oreille 334. Dans chacun des paliers 332 il est aménagé un alésage 333 de manière que les deux alésages 333 de ces deux paliers soient alignés l'un par rapport à l'autre, et qu'ils aient un axe commun qui est l'axe de pivotement 61.

Chacune des deux oreilles 334 comporte deux côtés 336 et 337 sur lesquels viennent s'appliquer respectivement deux oreilles 312 aménagées sur le flasque intermédiaire 306, et deux oreilles 314 aménagées sur le flasque intermédiaire 308. Chacune des oreilles 334 de la pièce pivot 330 possède un alésage 335, et de la même façon les oreilles 312 possèdent des alésages 317, tandis que les oreilles 314 possèdent des alésages 319. Ces différents alésages sont alignés les uns par rapport aux autres, de manière que la pièce pivot 330 puisse être solidarisée avec les deux flasques intermédiaires 306 et 308 au moyen de deux boulons 338.

Chacun des deux paliers 332 de la pièce pivot 330 reçoit un palier extrême référencé respectivement 62a et 62b qui sont emboîtés respectivement dans les alésages aménagés dans les paliers respectifs 332. Chacun de ces deux paliers extrêmes 62a et 62b reçoit l'arbre 61, qui fait saillie par rapport à chacun des deux paliers 332. De plus, cet arbre 61 est monté par ses parties en saillie entre les deux oreilles 63a et 63b d'une pièce de liaison 64, de manière que les deux paliers 332 de la pièce pivot 330 soient montés entre ces deux oreilles 63a et 63b. Ces deux oreilles 63a et 63b s'étendent chacune latéralement par rapport à respectivement l'un des deux paliers 332 et parallèlement à ceux-ci. Cette pièce de liaison 64 s'étend le long du petit côté 8 en se prolongeant au-delà des oreilles 63a et 63b, et ceci sur une partie des grands côtés 9 qui l'entourent pour s'y appuyer. Plus précisément, cette pièce de liaison 64 forme capot, au niveau dudit petit côté 8, pour la ceinture 7 à section droite en forme de U et y est solidarisée par vissage sur les branches de l'étrier 10. Les parties de ladite pièce 64 qui se trouvent sensiblement au niveau des grands côtés 9, et au-delà des oreilles 63a et 63b portent deux chapes 65a et 65b qui sont solidarisées l'une et l'autre avec une oreille support en saillie par rapport aux extrémités des branches de la ceinture 7.

Chacune des oreilles 63a et 63b de cette pièce de liaison 64 est traversée par un palier référencé respectivement 66a et 66b, de manière à recevoir l'arbre 61. Cet arbre 61 est muni à une extrémité d'une tête 67a, qui vient s'appuyer sur la surface externe de l'oreille 63a. Cet arbre 61 possède également à son autre extrémité une partie filetée, dont le filetage coopère avec le filetage complémentaire d'un écrou 67b, qui s'appuie sur la surface extérieure de l'oreille 63b.

La tige 55 cylindrique de petit diamètre de la pièce de liaison 346 est axée avec l'axe longitudinal de changement de pas de la pale en position neutre de ladite pale. Cette tige 55 est emboîtée dans un alésage complémentaire qui traverse une rotule sphérique 56 montée libre en rotation autour de son centre entre deux calottes complémentaires dont sont munies au niveau de leurs surfaces en regard l'une de l'autre, les épaulements 23a et 23b formant ensemble le fond de la chape 17. La tige 55 est apte à coulisser axialement par rapport à l'alésage complémentaire qui la reçoit dans la rotule 56.

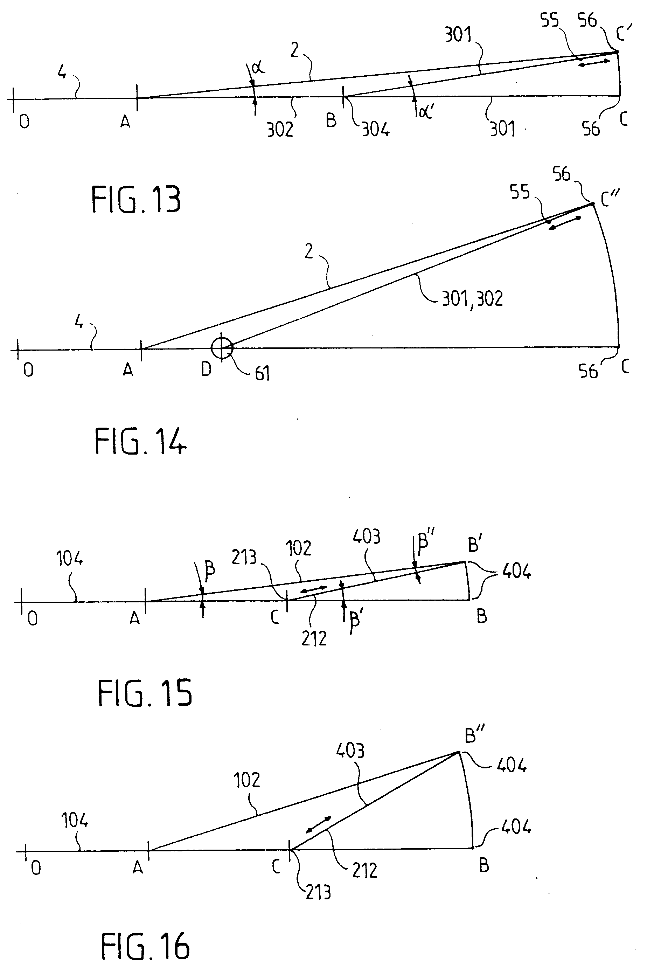

En fonctionnement, un tel dispositif d'amortissement est sollicité de la façon qui va maintenant être décrite. Dans ses mouvements de traînée, la pale et la pièce d'attache 2, associées audit amortisseur 3, pivote autour du centre A de la butée lamifiée sphérique 13, ce point A étant fixe par rapport au corps de moyeu 4. En se référant plus particulièrement à la Figure 13, qui illustre schématiquement les mouvements des éléments constituant principalement ladite pièce d'attache 2 dans un plan de traînée tournant avec le corps de moyeu 4 autour de l'axe du rotor du giravion, on voit que lorsque ladite pièce d'attache 2 tourne autour du point A d'un angle α, le centre de la rotule 56, qui est fixe par rapport à ladite pièce 2, passe d'un point C à un point C' par rotation simple autour dudit centre A. L'organe stator 302 étant maintenu solidaire dans ledit plan de traînée de la ceinture 7 du corps de moyeu 4, par l'intermédiaire de la liaison pivot réalisée par l'arbre 61, l'axe de pivotement relatif 304 des organes rotor 301 et stator 302 reste fixe par rapport audit corps de moyeu 5 et se maintient donc en un point B fixe dans ledit plan de traînée. L'organe rotor 301 qui est articulé d'une part à l'une de ses extrémités en pivotement autour de la rotule 56, et d'autre part en pivotement autour dudit axe 304, pivote alors nécessairement, d'un angle α' autour dudit point B pour accompagner le pivotement de la rotule 56 autour du point A, la tige 55 coulissant sensiblement, ainsi que l'indique la double flèche représentée sur la Figure 13, dans l'évidement complémentaire de la rotule 56 dans laquelle elle est montée, de façon à accompagner la légère modification de distance entre l'axe 304 et le centre de la rotule 56 et à rendre compatible le pivotement d'un angle α' de l'organe rotor 301 autour de l'axe 304 et le pivotement d'un angle α de son point d'articulation sur la rotule 56, autour du point A, avec la pale et la pièce d'attache 2.

C'est de cet angle α' dont pivotent relativement les organes rotor 301 et stator 302 et donc dont est sollicité le dispositif d'amortissement 303 par l'intermédiaire du mouvement relatif des flasques externes 305, 309 et central 307 avec les flasques intermédiaires 306 et 308, reliés les uns aux autres par les couches viscoélastiques 310.

On notera encore qu'un tel dispositif d'amortissement 303 permet d'obtenir un amortissement relatif d'un angle α' supérieur à l'angle α dont pivote la pale en traînée, ce d'autant plus que l'axe de pivotement 304 sera éloigné radialement à l'extérieur du centre de traînée A et proche de la rotule 56.

Par ailleurs, une telle structure d'amortissement présente l'avantage d'éviter tout couplage entre les mouvements de pas, traînée et battement. L'orientation en pas de la pale correspond en effet à un mouvement de pivotement de ladite pale et de sa pièce d'attache 2 autour de l'axe X-X' représenté sur la Figure 2, qui passe, quelle que soit la position de ladite pale, à la fois par le centre A de la butée lamifiée sphérique et le centre de la rotule 56. Dès lors, on voit qu'un changement d'orientation en pas ne modifie aucunement les positions relatives des organes rotor 301 et stator 302. Il n'existe donc aucun couplage entre les mouvements de pas et les mouvements de traînée.

Quant aux mouvements de battement, on voit, si l'on se réfère à la Figure 14, que lors d'un tel mouvement, la pièce d'attache 2 pivote avec la pale autour du centre de la butée lamifiée sphérique A, entraînant ainsi dans son pivotement la rotule 56, dont le centre passe de C en C'' dans un plan de battement tournant avec le corps de moyeu 4 autour de l'axe du rotor. Les organes rotor 301 et stator 302 sont alors amenés à pivoter ensemble autour de l'axe de l'arbre 61 (point D du plan de pivotement) pour accompagner le pivotement de la rotule 56, la tige 55 coulissant comme indiqué par la double flèche sur la figure sensiblement dans l'évidement complémentaire dans lequel elle est montée dans la rotule 56. Là encore, on voit que les positions relatives des organes rotor 301 et stator 302 sont inchangées par un tel mouvement de battement: les mouvements de battement et l'amortissement de traînée sont indépendants.

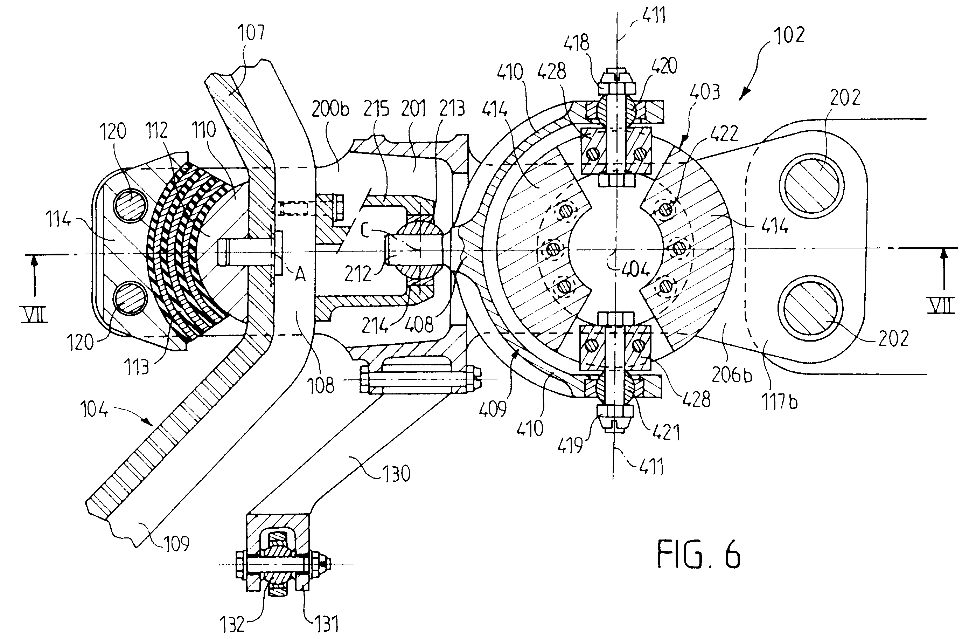

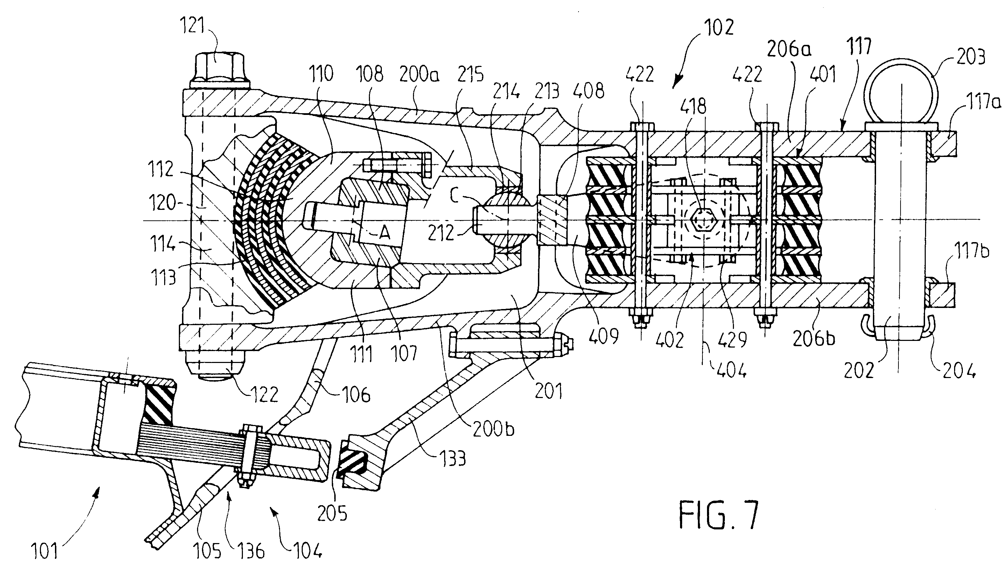

Une autre variante possible de l'invention a été représentée sur les Figures 6 à 12. On a repris pour les éléments de la tête de rotor précédemment décrite que l'on retrouve sur cette nouvelle variante, les mêmes numérotations de référence augmentées de 100.

En particulier, la tête de rotor conforme à cette nouvelle variante comporte un moyeu 101 à mât tubulaire intégré sur lequel sont articulées par l'intermédiaire de pièces d'attache 102, en battement pas et traînée des pales (non représentées), chacune associée à un dispositif d'amortissement 403 de ses mouvements de traînée, du type rotatif.

Le corps tubulaire de moyeu 104 s'évase à partir de la partie mât (non représentée) par deux parties tubulaires tronconiques 105 et 106 qui le prolongent, la partie tronconique supérieure 106 étant moins évasée que la partie tronconique 105. La partie 106 étant associée à une ceinture de renforcement 107, de section droite en forme de U tournée vers l'extérieur dudit corps tubulaire 104. Cette ceinture 107 s'étend selon un contour ayant sensiblement la forme d'un polygone pseudo-régulier, à petits côtés 108 égaux alternant avec des grands côtés 109 égaux. Sur chaque petit côté 108, est encastré un étrier 110 dont le fond 112 constitue une armature externe portant une butée lamifiée sphérique 113, l'armature interne 114 de cette butée 113 étant solidaire de la pièce d'attache 102. Cette armature interne 114 est fixée par l'intermédiaire de boulons 121 et d'écrous 122 en entretoise entre les extrémités des branches supérieure 200a et inférieure 200b formant une chape radiale fourchue prolongeant vers l'intérieur du rotor un manchon central 201 de la pièce d'attache 102. A son autre extrémité, cette pièce d'attache 102 est également conformée selon une chape 117 entre les deux branches 117a et 117b de laquelle le pied de la pale correspondante est retenu par l'intermédiaire de deux broches 202 passées dans des orifices ménagés à cet effet dans ledit pied et dans lesdites branches 117a et 117b. L'une de ces broches 202 est munie à sa partie supérieure d'un anneau 203 permettant son désengagement manuel après désemboîtement d'une clavette de maintien 204 la bloquant à sa partie inférieure. Ceci permet notamment, après désengagement de cette broche 202, de faire pivoter la pale autour de l'autre des deux goupilles 202 afin de replier ladite pale lorsque le giravion est au repos.

Le manchon central 201 porte latéralement le levier de commande de pas 130, dont le centre de la chape d'extrémité 131 reste au voisinage de l'axe de battement de la pale correspondante. Ce manchon 201 porte également dans sa partie inférieure une butée basse de battement 133 terminée à son extrémité inférieure par un patin d'usure amovible 205 destinée à coopérer avec un anneau réciproque 136 qui est monté, de façon connue en soi, autour du moyeu 101 afin de limiter les battements de la pale vers le bas.

Les branches 117a et 117b de la chape 117 se prolongent jusqu'au manchon central 201 en deux plaques longitudinales 206a et 206b, sensiblement planes et surépaissies vers l'intérieur de la pièce d'attache 102 par rapport à leur partie au niveau dudit manchon 201. Chacune de ces plaques 206a et 206b est traversée dans son épaisseur par des alésages 207a et 207b dont les centres sont respectivement répartis régulièrement sur un cercle dans le plan de la plaque 206a ou 206b qu'ils traversent, dont le centre est disposé sur la longueur médiane de ladite plaque 206a, 206b. Ces alésages 207a et 207b sont prévus pour recevoir des boulons de fixation 422.

La tête de rotor de giravion selon l'invention représentée sur les Figures 6 à 12 comporte le moyeu 101 auquel chaque pale est raccordée par l'intermédiaire de la pièce d'attache 102 et de la butée lamifiée sphérique 113. Le dispositif rotatif d'amortissement 403 en traînée du type viscoélastique est disposé entre la pièce d'attache 102 et le moyeu 101, de manière que le dispositif d'amortissement 403 soit articulé sur le moyeu 101 autour d'un axe 411, qui permet son pivotement dû aux battements de la pale. Le dispositif d'amortissement 403 comporte une pièce de liaison 409, qui est reliée au moyeu 101 par une rotule 213 dans laquelle cette pièce de liaison 409 est apte à se translater.

Le dispositif d'amortissement 403 qui est monté entre la pale et le moyeu 101 est du type comportant deux organes 401 et 402 aptes à pivoter autour d'un axe commun 404. Les mouvements relatifs de ces organes sont amortis viscoélastiquement. Le premier organe est appelé organe rotor 401, tandis que le deuxième organe est appelé organe stator 402. L'organe rotor 401 et l'organe stator 402 sont aptes à pivoter l'un par rapport à l'autre autour de l'axe de pivotement relatif 404, qui est leur axe de révolution. Sur l'organe stator 402 est en outre articulé en pivotement autour d'un axe 411 dans son plan médian et sensiblement perpendiculaire à l'axe de la pale, ledit axe 411 passant par l'axe 404, la pièce de liaison 409.

L'amortisseur viscoélastique rotatif 403 est constitué par un empilement alterné d'au moins deux flasques métalliques, et d'au moins une couche fixée aux flasques par vulcanisation ou collage d'un matériau viscoélastique à grande raideur et à rémanence élevée pour les déformations, chacun des flasques étant relié au moyeu 101 ou à la pièce d'attache 102.

Dans la réalisation représentée sur les Figures 6 à 12, l'amortisseur viscoélastique rotatif 403 est en forme de couronne plate, qui est inséré entre les deux plaques 206a et 206b de la pièce d'attache 102. Cet amortisseur viscoélastique rotatif 403 comporte cinq flasques métalliques et quatre couches viscoélastiques 417. L'amortisseur viscoélastique rotatif 403 est ainsi constitué par deux flasques externes 412 et 416, d'un flasque central 414, et de deux flasques intermédiaires 413 et 415. Le flasque externe 412 est relié aux flasques intermédiaires 413 par une couche viscoélastique 417, le flasque intermédiaire 413 est relié au flasque central 414 par une couche viscoélastique 417, le flasque central 414 est relié au flasque intermédiaire 415 par une couche viscoélastique 417, et le flasque intermédiaire 415 est relié au flasque externe 416 par une couche viscoélastique 417. Les deux flasques externes 412 et 416 ainsi que le flasque central 414 sont reliés à la pièce d'attache 102, tandis que les deux flasques intermédiaires 413 et 415 sont reliés au moyeu 101.

Dans le mode de réalisation de l'invention représenté sur les Figures 6 à 12, l'amortisseur viscoélastique 403 a:
- les deux flasques externes 412 et 416 ainsi que le flasque central 414 qui sont constitués chacun par deux segments ayant une forme générale de segments d'anneau,
- les deux flasques intermédiaires 413 et 415 qui ont une forme générale d'anneau,
- les couches viscoélastiques 417 qui sont constituées chacune par deux segments ayant une forme générale de segments d'anneau.

Dans cette configuration de l'invention, les deux flasques externes 412 et 416 et le flasque central 414 de l'amortisseur viscoélastique rotatif 403 sont solidarisés aux deux plaques 206a et 206b de la pièce d'attache 102. Les deux flasques intermédiaires 413 et 415 sont reliés au moyeu 101 par la pièce de liaison 409.

La pièce de liaison 409 est articulée sur les deux flasques intermédiaires 413 et 415 par une liaison de pivotement autour de l'axe 411, qui est fixe par rapport aux flasques intermédiaires 413 et 415. Cet axe 411 est perpendiculaire à l'axe 404 de l'amortisseur viscoélastique rotatif 403, c'est-à-dire à l'axe de pivotement 404 relatif desdits flasques intermédiaires 413 et 415 par rapport au flasque externe 412 et 416 et au flasque central 414. La pièce de liaison 409 est d'autre part reliée au moyeu 101 par la rotule 213, dans laquelle la pièce de liaison 409 est apte à se translater.

Les deux flasques externes 412 et 416, ainsi que le flasque central 414 sont solidarisés aux deux plaques 206a et 206b de la pièce d'attache 102 par six boulons référencés 422. Ces boulons 422 sont disposés en nombre égal de part et d'autre de l'axe de pivotement 411. Les boulons 422 s'engagent dans des alésages 424, qui sont aménagés dans chacun des flasques externes 412 et 416 ainsi que dans le flasque central 414. De plus, ces boulons 422 s'engagent également dans des alésages 425 qui sont aménagés dans des entretoises 423. Ces entretoises 423 sont disposées par groupe de deux pour chaque boulon 422, de manière que l'une de ces entretoises 423 soit située entre le flasque central 414 et l'un des flasques externes 412, et que l'autre entretoise 423 soit située entre le flasque central 414 et l'autre flasque externe 416.

Les entretoises 423 ont une longueur qui est légèrement inférieure à la distance à l'état libre entre le flasque central 414 et le flasque externe 412 ou 416 correspondant, de façon qu'après le blocage des boulons 422, il y ait une légère contrainte des couches viscoélastiques 417.

Dans le mode de réalisation de l'invention représenté sur les Figures 6 à 12, la pièce de liaison 409 est un étrier avec deux branches 410, et une embase 408. Les deux branches 410 entourent en partie l'amortisseur viscoélastique rotatif 403, et chacune des extrémités des branches 410 est articulée autour de l'axe de pivotement 411. L'embase 408 porte une tige 212 apte à coulisser dans un alésage complémentaire, qui est aménagé dans la rotule 213 montée dans le moyeu 101.

L'étrier 409 comporte de plus à chacune des extrémités des branches 410, une rotule référencée respectivement 420 et 421 dans laquelle est montée une articulation. Cette articulation permet un léger déboîtement des branches 410 par rapport à leur axe de pivotement 411, pour accompagner les mouvements de pas de la pièce d'attache 102 de la pale.

Chaque axe de pivotement 411 de la branche 410 de l'étrier 409 est constitué par un boulon référencé respectivement 418 et 419, sur lequel est monté la rotule correspondante 420 ou 421. Chacun de ces boulons 418 et 419 est monté dans un support 428, qui est disposé entre les deux flasques intermédiaires 413 et 415, et qui est fixé sur ces deux flasques intermédiaires par deux boulons référencés 429.

La tige 212 est emboîtée dans un évidement complémentaire ménagé dans une rotule 213 apte à pivoter autour de son centre, qui est quant à lui, fixe par rapport au corps de moyeu 101, ladite rotule 213 étant montée dans un évidement complémentaire 214 ménagé dans un capot 215 solidarisé de l'étrier 110 par vissage sur les branches 111. La tige 212 est apte à coulisser dans son logement complémentaire dans la rotule 213.

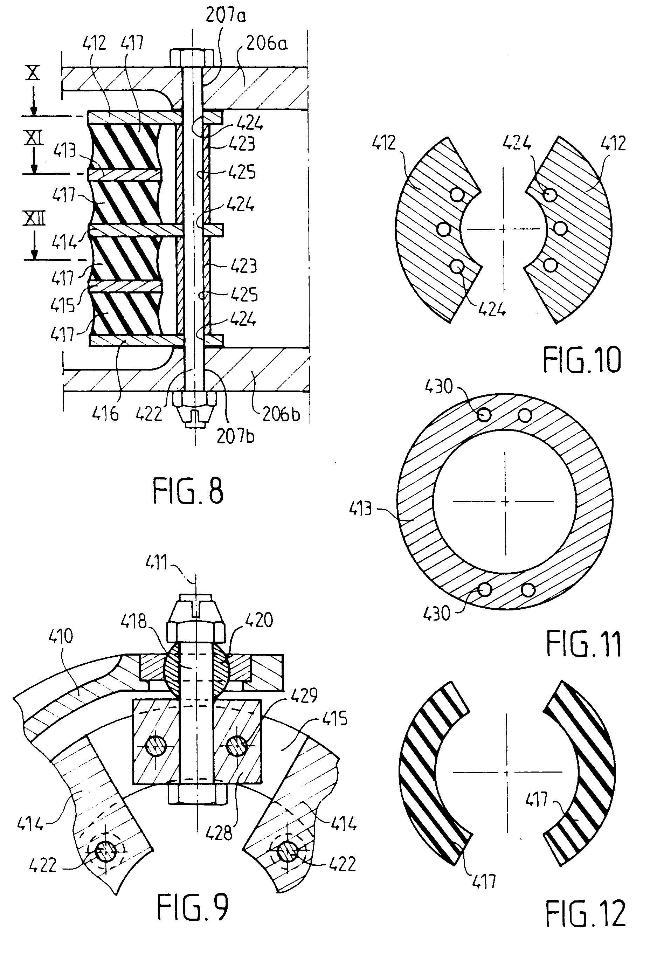

En se référant plus particulièrement aux Figures 15 et 16, on voit qu'en fonctionnement, une telle structure de tête de rotor est sollicitée de la façon qui va maintenant être décrite. Lors d'un pivotement de traînée de la pale et de sa pièce d'attache 102 d'un angle β autour du centre A de la butée lamifiée sphérique 113 dans un plan tournant avec le rotor du giravion, l'organe rotor 401, solidaire de la pièce d'attache 102, pivote d'un même angle β avec ladite pale autour dudit centre A, l'axe 404 accompagnant ce pivotement et passant dans ledit plan tournant d'un point B à un point B'. La rotule 213, accompagnant les mouvements de rotation du corps de moyeu 5 autour de l'axe du rotor de giravion, reste centrée sur le point C fixe dans ledit plan, de sorte que l'organe stator 402, articulé, d'une part, en pivotement autour de l'axe 404 sur l'organe rotor 401, et d'autre part, en pivotement autour du centre de ladite rotule 213, pivote dans ledit plan tournant par rapport au centre C de la rotule, d'un angle référencé par β' sur la Figure 11. L'organe stator 402 et l'organe rotor 401 auront donc pivoté l'un par rapport à l'autre d'un angle β'' égal à β' - β, β' étant en tout état de cause supérieur à β. Cet angle β'' est d'autant plus important que la distance séparant le centre A de la butée lamifiée sphérique 113 du centre C de la rotule 213, radialement à l'extérieur de A, est proportionnellement grande devant la distance séparant le centre C de ladite rotule 213 de l'axe 404 de pivotement relatif entre les deux organes 401 et 402. En outre, comme indiqué par la double flèche sur la figure, le pivotement d'un angle β de la pale autour du centre A est accompagné d'un coulissement de la tige 212 dans l'évidement complémentaire de la rotule 213 dans lequel ladite tige 212 est montée, de façon que la rotation de l'axe de pivotement autour du point A soit compatible avec le pivotement de l'organe stator 402 d'un angle β' autour du centre C.

Ainsi que cela a été plus particulièrement représenté sur la Figure 16, lors d'un mouvement de battement de la pale, l'ensemble de la pièce d'attache 102 pivote autour du centre A, entraînant dans ce mouvement de pivotement à la fois l'organe rotor 401 et l'organe stator 402. L'étrier 409 qui est articulé d'une part sur un diamètre de l'organe rotor, par l'intermédiaire des boulons 418 et 419, et d'autre part sur le centre C de la rotule 213, fixe par rapport au corps de moyeu 105, pivote alors par rapport audit organe stator 402, de façon à accompagner ce mouvement de battement, la tige 212 sortant, quant à elle, légèrement de l'évidement dans lequel elle est montée sur la rotule 213.

Quant aux mouvements de pas, ceux-ci sont rendus compatibles avec les mouvements de traînée de la pale et de la pièce d'attache 102, par l'intermédiaire des rotules 420 et 421 autour desquelles les branches 410 de l'étrier 409 sont montées en pivotement diamétral sur l'organe stator 402, ces rotules 420 et 421 autorisant un léger déboîtement de l'organe stator 402 par rapport audit étrier 409 de sorte que ledit organe stator 402 peut pivoter autour de l'axe de la pale passant par le point A au centre de la butée lamifiée sphérique 113 lorsque le point C du centre de la rotule 213 n'est pas sur cet axe, la pale et la pièce d'attache 102 étant décalées en battement par rapport à leur position de repos représentée sur la Figure 16, l'étrier 409 restant articulé autour dudit point C, tandis que l'organe stator 402 se désemboîte par rapport audit étrier 409 pour accompagner l'orientation en pas de la pale.

D'autres modes de réalisation d'une tête de rotor conforme à l'invention, telle que revendiquée, sont bien entendu possibles. En particulier, les pales pourraient être d'une pièce avec leur piège d'attache.

Les signes de référence insérés après les caractéristiques techniques mentionnées dans les revendications, ont pour seul but de faciliter la compréhension de ces dernières, et n'en limitent aucunement la portée.

## Revendications

1. Tête de rotor pour giravion comportant un moyeu (1) auquel chaque paie est raccordée par l'intermédiaire d'une pièce d'attache (2) et d'une butée lamifiée sphérique (13), un dispositif rotatif d'amortissement (303) en traînée du type viscoélastique étant disposé entre la pièce d'attache (2) et le moyeu (1) et étant rélié au moyeu (1), de manière que le dispositif d'amortissement (303) soit articulé sur le moyeu (1) autour d'un axe (61) permettant son pivotement dû au battement de la pale, le dispositif d'amortissement (303) comportant une pièce de liaison (346) reliée à la pièce d'attache (2) par une rotule (56) dans laquelle ladite pièce de liaison (346) est apte à se translater; caractérisée en ce que l'amortisseur viscoélastique (303) rotatif est constitué par un empilement alterné d'au moins deux flasques métalliques, et d'au moins une couche fixée aux flasques par vulcanisation ou collage d'un matériau viscoélastique à grande raideur et à rémanence élevée pour les déformations, chacun des flasques étant relié ou au moyeu (1) à la pièce d'attache (2) par ladite pièce de liaison (346)

2. Tête de rotor pour giravion comportant un moyeu (101) auquel chaque paie est raccordée par l'intermédiaire d'une pièce d'attache (102) et d'une butée lamifiée sphérique (113), un dispositif rotatif d'amortissement (403) en traînée du type viscoélastique étant disposé entre la pièce d'attache (102) et le moyeu (101) et étant relié à la pièce d'attache (102), de manière que le dispositif d'amortissement (403) soit articulé sur le moyeu (101) autour d'un axe (411) permettant son pivotement dû au battement de la pale, le dispositif d'amortissement (403) comportant une pièce de liaison (409) reliée au moyeu (101) par une rotule (213) dans laquelle ladite pièce de liaison (409) est apte à se translater; caractérisée en ce que l'amortisseur viscoélastique (403) rotatif est constitué par un empilement alterné d'au moins deux flasques métalliques, et d'au moins une couche fixée aux flasques par vulcanisation ou collage d'un matériau viscoélastique à grande raideur et à rémanence élevée pour les déformations, chacun des flasques étant relié au moyeu (101) par ladite pièce de liaison (409) ou à la pièce d'attache (102).

3. Tête de rotor selon l'une des revendications 1 ou 2, caractérisée en ce que l'amortisseur viscoélastique rotatif (303, 403) est en forme de couronne plate insérée entre les deux plaques (15, 16, 206a, 206b) de la pièce d'attache (2, 102).

4. Tête de rotor selon la revendication 3, caractérisée en ce que l'amortisseur viscoélastique rotatif (303, 403) comporte cinq flasques métalliques et quatre couches viscoélastiques (310, 417), les deux flasques externes (305, 309, 412, 416) et le flasque central (307, 414) étant reliés à la pièce d'attache (2, 102), et les deux flasques intermédiaires (306, 308, 413, 415) étant reliés au moyeu (1, 101).

5. Tête de rotor selon la revendication 4, caractérisée en ce que l'amortisseur viscoélastique rotatif (303) a:
- les deux flasques externes (305, 309) et le flasque central (307), qui sont solidarisés à la pièce de liaison (346), qui est reliée à la pièce d'attache (2) par une rotule (56) dans laquelle ladite pièce de liaison (346) est apte à se translater;
- les deux flasques intermédiaires (306, 308), qui sont articulés sur le moyeu (1), sur lequel ils sont montés, par l'intermédiaire d'une liaison de pivotement autour d'un axe fixe (61) par rapport audit moyeu (1), ledit axe de pivotement (61) étant perpendiculaire à l'axe (304) de l'amortisseur viscoélastique rotatif (303), c'est-à-dire à l'axe de pivotement (304) relatif desdits flasques intermédiaires (306, 308) par rapport aux flasques externes (305, 309) et central (307), cette liaison de pivotement s'effectuant au moyen d'une pièce pivot (330) solidaire des deux flasques intermédiaires (306, 308).

6. Tête de rotor selon la revendication 5, caractérisée en ce que les flasques métalliques (305, 309) et les couches viscoélastiques (310) ont une forme générale d'anneau.

7. Tête de rotor selon l'une quelconque des revendications 5 et 6, caractérisée en ce que la pièce de liaison (346) comporte:
- à une de ses extrémités, une tige (55) apte à coulisser dans un alésage complémentaire aménagé dans la rotule (56) montée dans la pièce d'attache (2); et
- à l'autre extrémité une embase (322) ayant un logement central (323) dimensionné pour recevoir une protubérance (313) aménagée sur le flasque central (307), les deux flasques externes (305, 309) étant munis d'une protubérance (311, 315) semblable venant s'appliquer sur chacun des côtés (325, 326) correspondants de l'embase (322), de manière que cette embase (322) puisse être solidarisée avec le flasque central (307) et les deux flasques externes (305, 309).

8. Tête de rotor selon la revendication 7, caractérisée en ce que la pièce de liaison (346) est solidarisée avec le flasque central (307) et les flasques externes (305, 309) au moyen de deux boulons (321), qui s'engagent dans des alésages (324) aménagés dans l'embase (322) de la pièce de liaison (346), et dans des alésages (316, 318, 320) des protubérances du flasque central (307) et des flasques externes (305, 309).

9. Tête de rotor selon l'une quelconque des revendications 5 à 8, caractérisée en ce que la pièce pivot (330) comporte:
- une partie centrale (331) munie à chacune de ses extrémités d'un palier (332) dans lequel est aménagé un alésage (333), les deux alésages (333) étant alignés l'un par rapport à l'autre et ayant un axe commun qui est l'axe de pivotement (61);
- une oreille (334) à chacune de ses extrémités, les deux flasques intermédiaires (306, 308) étant munis de deux oreilles (312, 314) venant s'appliquer sur chacun des côtés (336, 337) de l'oreille (334) correspondants de la pièce pivot (330), de manière à ce que les flasques intermédiaires (306, 308) soient solidarisés avec la pièce pivot (330).

10. Tête de rotor selon la revendication 9, caractérisée en ce que la pièce pivot (330) est solidarisée avec les deux flasques intermédiaires (306, 308) au moyen de deux boulons (338), qui s'engagent dans des alésages (335) aménagés dans chacune des oreilles (334) de la pièce pivot (330) et dans des alésages (317, 319) de chacune des oreilles (312, 314) des deux flasques intermédiaires (306, 308).

11. Tête de rotor selon l'une quelconque des revendications 5 à 10, caractérisée en ce que le moyeu (1) porte pour chaque pale, et par l'intermédiaire de deux oreilles (63a, 63b) dont il est muni, un arbre (61) sur lequel est articulé autour de l'axe dudit arbre, c'est-à-dire l'axe de pivotement (61), la pièce pivot (330).

12. Tête de rotor selon la revendication 4, caractérisée en ce que l'amortisseur viscoélastique rotatif (403) a:
- les deux flasques externes (412, 416) et le flasque central (414) qui sont solidarisés aux deux plaques (206a, 206b) de la pièce d'attache (102),
- les deux flasques intermédiaires (413, 415), qui sont reliés au moyeu (101) par une pièce de liaison (409);
- ladite pièce de liaison (409) étant articulée sur les deux flasques intermédiaires (413, 415) par une liaison de pivotement autour d'un axe (411) fixe par rapport aux flasques intermédiaires (413, 415), ledit axe (411) étant perpendiculaire à l'axe (404) de l'amortisseur viscoélastique rotatif (403), c'est-à-dire à l'axe de pivotement (404) relatif desdits flasques intermédiaires (413, 415) par rapport aux flasques externes (412, 416) et central (414);
- ladite pièce de liaison (409) étant reliée au moyeu (101) par une rotule (213) dans laquelle ladite pièce de liaison (409) est apte à se translater.

13. Tête de rotor selon la revendication 12, caractérisée en ce que:
- les deux flasques externes (412, 416) et le flasque central (414) sont constitués chacun par deux segments ayant une forme générale de segments d'anneau,
- les deux flasques intermédiaire (413, 415) ont une forme générale d'anneau,
- les couches viscoélastiques (417) sont constituées chacune par deux segments ayant une forme générale de segments d'anneau.

14. Tête de rotor selon l'une des revendications 12 et 13, caractérisée en ce que:
- les deux flasques externes (412, 416) et le flasque central (414) sont solidarisés aux deux plaques (206a, 206b) de la pièce d'attache (102) par six boulons (422) disposés en nombre égal de part et d'autre de l'axe de pivotement (411), ces boulons (422) s'engageant dans des alésages (424) aménagés dans chacun des flasques externes (412, 416) et dans le flasque central (414), et également dans des alésages (425) aménagés dans des entretoises (423) disposées par groupe de deux pour chaque boulon (422), l'une de ces entretoises (423) étant située entre le flasque central (414) et l'un des flasques externes (412), et l'autre entretoise (423) étant située entre le flasque central (414) et l'autre flasque externe (416);
- les entretoises (423) ayant une longueur légèrement inférieure à la distance à l'état libre entre le flasque central (414) et le flasque externe (412, 416) correspondant, de manière qu'après blocage des boulons (422), il y ait une légère contrainte des couches viscoélastiques (417).

15. Tête de rotor selon l'une quelconque des revendications 12 à 14, caractérisée en ce que la pièce de liaison (409) est un étrier:
- dont les deux branches (410) entourent en partie l'amortisseur viscoélastique rotatif (403), et dont les extrémités desdites branches (410) sont articulées autour de l'axe de pivotement (411);
- dont l'embase (408) porte une tige (212) apte à coulisser dans un alésage complémentaire aménagé dans la rotule (213) montée dans le moyeu (101).

16. Tête de rotor selon la revendication 15, caractérisée en ce que l'étrier (409) comporte à chacune des extrémités des branches (410) une rotule (420, 421) dans laquelle est montée une articulation, de façon à permettre un léger déboîtement des branches (410) par rapport à leur axe de pivotement (411), pour accompagner les mouvements de pas de la pièce d'attache (102) de la pale.

17. Tête de rotor selon la revendication 16, caractérisée en ce que chaque axe de pivotement (411) de la branche (410) de l'étrier (409) est constitué par un boulon (418, 419), sur lequel est montée la rotule (420, 421) correspondante, ledit boulon étant monté dans un support (428) disposé entre les deux flasques intermédiaires (413, 415) et fixé sur ces deux flasques intermédiaires par deux boulons (429).

## Claims

1. A rotor head for rotorcraft comprising a hub (1) to which each blade is connected via a fastening member (2) and a spherical laminated stop (13), whereas a dragging rotary viscoelastic-type dampening device (303) has been arranged between the fastening member (2) and the hub (1) and is connected to the hub (1) so that the dampening device (303) is articulated on the hub (1) around an axis (61) in order to pivot under the effect of the flapping of the blade, whereas the said dampening device (303) comprises a linking member (346) connected to the fastening member (2) by a trunnion (56) in which the said linking member (346) can be translated; characterised in that the rotary viscoelastic dampening device (303) is made of an alternate stack of at least two metal flanges and of at least one layer fixed to the flanges by a vulcanisation process or by gluing a high stiffness viscoelastic material, of high remanence to sustain deformations, whereas each flange is connected to the hub (1) or to the fastening member (2) by the said linking member (346).

2. A rotor head for rotorcraft comprising a hub (101) to which each blade is connected via a fastening member (102) and a spherical laminated stop (113), whereas a dragging rotary viscoelastic-type dampening device (403) has been arranged between the fastening member (102) and the hub (101) and is connected to the fastening member (102) so that the dampening device (403) is articulated on the hub (101) around an axis (411) in order to pivot under the effect of the flapping of the blade, whereas the said dampening device (403) comprises a linking member (409) connected to the hub (101) by a trunnion (213) in which the said linking member (409) can be translated; characterised in that the rotary viscoelastic dampening device (403) is made of an alternate stack of at least two metal flanges and of at least one layer fixed to the flanges by a vulcanisation process or by gluing a high stiffness viscoelastic material, of high remanence to sustain deformations, whereas each flange is connected to the hub (101) by the said linking member (409) or to the fastening member (102).

3. A rotor head according to one of claims 1 or 2, characterised in that the shape of the rotary viscoelastic dampener (303, 403) is a flat crown inserted between both flanges (15, 16, 206a, 206b) of the fastening member (2, 102).

4. A rotor head according to claim 3, characterised in that the rotary viscoelastic dampener (303, 403) comprises five metal flanges and four viscoelastic layers (310, 417), whereas both external flanges (305, 309, 412, 416) and the centre flange (307, 414) are connected to the fastening member (2, 102) and both intermediate flanges (306, 308, 413, 415) are connected to the hub (1, 101).

5. A rotor head according to claim 4, characterised in that the rotary viscoelastic dampener (303) has :
- both external flanges (305, 309) and the centre flange (307), interlocked with the linking member (346) which is connected to the fastening member (2) by a trunnion (56) in which the said linking member (346) can be translated;
- both intermediate flanges (306, 308), articulated on the hub (1), on which they are mounted, via a swivel link round an axis (61) fixed in relation to the said hub (1), whereas the said swivel axis (61) is perpendicular to the axis (304) of the rotary viscoelastic dampener (303), i.e. the relative swivel axis (304) of the said intermediate flanges (306, 308) in relation to the external flanges (305, 309) and the centre flange (307), whereby this swivel link is performed using a swivel member (330) interlocked with both intermediate flanges (306, 308).

6. A rotor head according to claim 5, characterised in that the shape of the metal flanges (305, 309) and of the viscoelastic layers (310) is more or less annular.

7. A rotor head according to any of the claims 5 and 6, characterised in that the linking member (346) comprises :
- at one of its ends, a stem (55) liable to slide through an additional bore arranged in the trunnion (56) mounted in the fastening member (2); and
- at the other end, a seat (322) with a centre recess (323) sized in order to accommodate an excrescence (313) provided on the centre flange (307), whereas both external flanges (305, 309) are fitted with a similar excrescence (311, 315) liable to rest on each of the corresponding sides (325, 326) of the seat (322), so that the said seat (322) can be interlocked with the centre flange (307) and both external flanges (305, 309).

8. A rotor head according to claim 7, characterised in that the linking member (346) is interlocked with the centre flange (307) and the external flanges (305, 309) using two bolts (321), engaging into the bores (324) arranged in the seat (322) of the linking member (346) and into the bores (316, 318, 320) of the excrescences of the centre flange (307) and of the external flanges (305, 309).

9. A rotor head according to any of the claims 5 to 8, characterised in that the pivot member (330) comprises :
- a centre section (331) fitted at each end with a bearing (332) in which a bore (333) has been drilled, whereas both bores (333) are aligned in relation to one another and share an axis which is the swivel axis (61);
- a lug (334) at each of its ends, whereas both intermediate flanges (306, 308) are fitted with two lugs (312, 314) resting on each corresponding side (336, 337) of the lug (334) of the pivot member (330), so that the intermediate flanges (306, 308) are interlocked with the pivot member (330).

10. A rotor head according to claim 9, characterised in that the pivot member (330) is interlocked with both intermediate flanges (306, 308) using two bolts (338, engaging into bores (335) arranged in each of the lugs (334) of the pivot member (330) and into bores (317, 319) of each lug (312, 314) of both intermediate flanges (306, 308).

11. A rotor head according to any of the claims 5 to 10, characterised in that the hub (1) carries for each blade, and via two lugs (63a, 63b) with which it is fitted, a shaft (61) on which the pivot member (330) is articulated around the axis of the said shaft, i.e. the swivel axis (61).

12. A rotor head according to claim 4, characterised in that the rotary viscoelastic dampener (403) has :
- both external flanges (412, 416) and the centre flange (414) interlocked with both plates (206a, 206b) of the fastening member (102),
- both intermediate flanges (413, 415) linked to the hub (101) by a linking member (409);
- whereas the said linking member (409) is articulated on both intermediate flanges (413, 415) by a swivel link around an axis (411) foxed in relation to the intermediate flanges (413, 415), whereas the said axis (411) is perpendicular to the axis (404) of the rotary viscoelastic dampener (403), i.e. the swivel axis (404) relative to the said intermediate flanges (413, 415) in relation to the external (412, 416) and centre (414) flanges;
- whereas the said linking member (409) is connected to the hub (101) by an articulation (213) in which the said linking member (409) can be translated.

13. A rotor head according to claim 12, characterised in that:
- both external flanges (412, 416) and the centre flange (414) are each constituted of two segments more or less annular in shape,
- the shape of both intermediate flanges (413, 415) is more or less annular,
- the viscoelastic layers (417) each comprise two segments more or less annular in shape.

14. A rotor head according to one of claims 12 and 13, characterised in that:
- both external flanges (412, 416) and the centre flange (414) are interlocked with both plates (206a, 206b) of the fastening member (102) by six bolts (422) arranged in equal number on either side of the swivel axis (411), whereas these bolts (422) engage into bores (424) arranged in each of the external flanges (412, 416) and in the centre flange (414), and also into bores (425) arranged in spacers (423) provided in pairs for each bolt (422), whereas one of these spacers (423) is located between the centre flange (414) and one of the external flanges (412), and the other spacer (423) is located between the centre flange (414) and the other external flange (416);
- since the spacers (423) are slightly shorter than the free distance between the centre flange (414) and the corresponding external flange (412, 416), the viscoelastic layers (417) are slightly stressed once the bolts (422) have been blocked.

15. A rotor head according to any of the claims 12 to 14, characterised in that the linking member (409) is a yoke :
- both branches of which (410) surround partially the rotary viscoelastic dampener (403), whereas the ends of the said branches (410) are articulated around the swivel axis (411);
- the seat of which (408) carries a stem (212) liable to slide into an additional bore arranged in the trunnion (213) mounted in the hub (101).

16. A rotor head according to claim 15, characterised in that the yoke (409) comprises at each end of the branches (410), a trunnion (420, 421) in which an articulation is mounted, enabling the branches (410) to come out of their swivel axis (411), in order to follow the stepping movement of the fastening member (102) of the blade.

17. A rotor head according to claim 16, characterised in that each swivel axis (411) of the branch (410) of the yoke (409) is made of a bolt (418, 419), on which the corresponding trunnion (420, 421) is mounted, whereas the said bolt is arranged in a bracket (428) arranged between both intermediate flanges (413, 415) and fixed on both these intermediate flanges by two bolts (429).

## Patentansprüche

1. Rotorkopf eines Drehflügelflugzeuges, umfassend eine Nahe (1), an der jedes Rotorblatt über ein Befestigungsteil (2) und einen kugelförmigen Anschlag (13) angeschlossen ist, wobei eine nachgezogene, drehbare Dämpfungsvorrichtung (303) viskoelastischen Typs zwischen dem Befestigungsteil (2) und der Nahe (1) angeordnet und mit der Nabe (1) verbunden ist, derart, daß die Dämpfungsvorrichtung (303) an der Nabe (1) gelenkig um eine Achse (61) angeordnet ist, die ihr Schwenken aufgrund des Ausschlags des Rotorblattes ermöglicht, wobei die Dämpfungsvorrichtung (303) ein Verbindungsteil (346) umfaßt, das mit dem Befestigungsteil (2) durch ein Kugelgelenk (56) verbunden ist, in dein das Verbindungsteil (346) eine Translationsbewegung durchführen kann, dadurch gekennzeichnet, daß die drehbare viskoelastische Dämpfung (303) von einer abwechselnden Übereinanderstapelung von mindestens zwei metallischen Flanschen und von mindestens einer Schicht gebildet ist, die an den Flanschen durch Vulkanisierung oder Kleben eines viskoelastischen Materials großer Steifigkeit und hoher Remanenz für die Verformungen befestigt ist, wobei jeder der Flansche mit der Nahe (1) oder dem Befestigungsteil (2) durch das Verbindungsteil (346) verbunden ist.

2. Rotorkopf eines Drehflügelflugzeuges, umfassend aus eine Nahe (101), an der jedes Rotorblatt über ein Befestigungsteil (102) und einen kugelförmigen Anschlag (113) angeschlossen ist, wobei eine nachgezogene, drehbare Dämpfungsvorrichtung (403) viskoelastischen Typs zwischen dem Befestigungsteil (102) und der Nahe (101) angeordnet und mit dem Befestigungsteil (102) verbunden ist, derart daß die Dämpfungsvorrichtung (403) an der Nahe (101) gelenkig um eine Achse (411) angeordnet ist, die ihr Schwenken aufgrund des Ausschlags des Rotorblattes ermöglicht, wobei die Dämpfungsvorrichtung (403) ein Verbindungsteil (409) umfaßt, das mit der Nahe (101) durch ein Kugelgelenk (213) verbunden ist, in dem das Verbindungsteil (409) eine Translationsbewegung durchführen kann, dadurch gekennzeichnet, daß die drehbare, viskoelastische Dämpfungsvorrichtung (403) von einer abwechselnden Übereinanderstapelung von mindestens zwei metallischen Flanschen und von mindestens einer Schicht gebildet ist, die an den Flanschen durch Vulkanisierung oder Kleben eines viskoelastischen Materials großer Steifigkeit und hoher Remanenz für die Verformungen befestigt ist, wobei jeder der Flansche mit der Nabe (101) durch das Verbindungsteil (409) oder dem Befestigungsteil (102) verbunden ist.

3. Rotorkopf nach einem der Ansprüche 1 oder 2, dadurch gekennzeichnet, daß der drehbare, viskoelastische Dämpfer (303, 403) die Form eines flachen Kranzes aufweist, der zwischen den beiden Platten (15, 16, 206a, 206b) des Befestigungsteils (2, 102) eingesetzt ist.

4. Rotorkopf nach Anspruch 3, dadurch gekennzeichnet, daß der drehbare, viskoelastische Dämpfer (303, 403) fünf metallische Flansche und vier viskoelastische Schichten (310, 417) umfaßt, wobei die beiden äußeren Flansche (305, 309, 412, 416) und der Mittelflansch (307, 414) mit dem Befestigungsteil (2, 102) verbunden sind und die beiden Zwischenflansche (306, 308, 413, 415) mit der Nahe (1, 101) verbunden sind.

5. Rotorkopf nach Anspruch 4, dadurch gekennzeichnet, daß der drehbare, viskoelastische Dampfer (303) aufweist:
- die beiden äußeren Flansche (305, 309) und den Mittelflansch (307), die mit dem Verbindungsteil (346) fest verbunden sind, der mit dem Befestigungsteil (2) durch ein Kugelgelenk (56) verbunden ist, in dein der Verbindungsteil (346) eine Translationsbewegung durchführen kann;
- die beiden Zwischenflansche (306, 308), die auf der Nahe (1) auf der sie montiert sind, mittels einer Schwenkverbindung um eine in bezug zu der Nahe (1) feste Achse (61) gelenkig angeordnet sind, wobei diese Schwenkachse (61) auf die Achse (304) des drehbaren, viskoelastischen Dämpfers (303) senkrecht steht, d.h. auf der Achse (304) für das relative Schwenken der Zwischenflansche (306, 308) in bezug zu den äußeren Flanschen (305, 309) und dem Mittelflansch (307), wobei diese Schwenkverbindung mit Hilfe eines Drehteils (330) erfolgt, das mit den beiden Zwischenflanschen (306, 308) fest verbunden ist.

6. Rotorkopf nach Anspruch 5, dadurch gekennzeichnet, daß die metallischen Flansche (305, 309) und die viskoelastischen Schichten (310) eine allgemeine Ringform aufweisen.

7. Rotorkopf nach einem der Ansprüche 5 und 6, dadurch gekennzeichnet, daß der Verbindungsteil (346) umfaßt:
- an einem seiner Enden eine Stange (55), die in einer komplementären Bohrung gleiten kann, die in dem Kugelgelenk (56) ausgespart ist, das in dem Befestigungsteil (2) montiert ist; und
- am anderen Ende eine Fußplatte (322), die eine Mittellagerung (323) aufweist, die derart dimensioniert ist, daß sie eine Ausstülpung (313) aufnimmt, die auf dem Mittelflansch (307) angeordnet ist, wobei die beiden äußeren Flansche (305, 309) mit einer ähnlichen Ausstülpung (311, 315) versehen sind, die an einer der entsprechenden Seiten (325, 326) der Fußplatte (322) zum Anliegen kommt, so daß diese Fußplatte (322) mit dem Mittelflansch (307) und den beiden äußeren Flanschen (305, 309) fest verbunden werden kann.

8. Rotorkopf nach Anspruch 7, dadurch gekennzeichnet, daß das Verbindungsteil (346) mit dem Mittelflansch (307) und den äußeren Flanschen (305, 309) mit Hilfe von zwei Bolzen (321) verbunden ist, die in Bohrungen (324), die in der Fußplatte (322) des Verbindungsteils (346) ausgespart sind, und in Bohrungen (316, 318, 320) der Ausstülpungen des Mittelflansches (307) und der äußeren Flansche (305, 309) eingreifen.

9. Rotorkopf nach einem der Ansprüche 5 bis 8, dadurch gekennzeichnet, daß der Drehteil (330) umfaßt:
- ein Mittelteil (331), das an jedem seiner Enden mit einem Lager (332) versehen ist, in dem eine Bohrung (333) angeordnet ist, wobei die beiden Bohrungen (333) zueinander ausgerichtet sind und eine gemeinsame Achse aufweisen, die die Schwenkachse (61) darstellt;
- eine Öse (334) an jedem seiner Enden, wobei die beiden Zwischenflansche (306, 308) mit zwei Ösen (312, 314) versehen sind, die an jeder der entsprechenden Seiten (336, 337) der Öse (334) des Drehteils (330) zum Anliegen kommen so daß die Zwischenflansche (306, 308) mit dem Drehteil (330) verbunden sind.

10. Rotorkopf nach Anspruch 9, dadurch gekennzeichnet, daß das Drehteil (330) mit den beiden Zwischenflanschen (306, 308) mit Hilfe von zwei Bolzen (338) verbunden ist, die in Bohrungen (335), die in jeder der Ösen (334) des Drehteils (330) vorgesehen sind, und in Bohrungen (317, 319) jeder der Ösen (312, 314) der beiden Zwischenflansche (306, 308) eingreifen.

11. Rotorkopf nach einem der Ansprüche 5 bis 10, dadurch gekennzeichnet, daß die Nahe (1) für jedes Rotorblatt mit Hilfe von zwei Ösen (63a, 63b), mit denen sie versehen ist, eine Welle (61) trägt, auf der um die Achse der Welle, d.h. die Schwenkachse (61), das Drehteil (330) gelenkig angeordnet ist.

12. Rotorkopf nach Anspruch 4, dadurch gekennzeichnet, daß der drehbare viskoelastische Dämpfer (403) aufweist:
- die beiden äußeren Flansche (412, 416) und den Mittelflansch (414), die mit den beiden Platten (206a, 206b) des Befestigungsteils (102) fest verbunden sind;
- die beiden Zwischenflansche (413, 415), die mit der Nahe (101) durch ein Verbindungsteil (409) verbunden sind;
- wobei das Verbindungsteil (409) auf den beiden Zwischenflanschen (413, 415) durch eine Schwenkverbindung um eine Achse (411) gelenkig angeordnet ist, die in bezug auf die Zwischenflansche (413, 415) fest ist, wobei die Achse (411) auf der Achse (404) des drehbaren viskoelastischen Dämpfers (403), d.h. auf der Achse (404) für das relative Schwenken der Zwischenflansche (413, 415) in bezug zu den äußeren Flanschen (412, 416) und den Mittelflansch (414), senkrecht steht;
- wobei das Verbindungsteil (409) mit der Nahe (101) durch ein Kugelgelenk (213) verbunden ist, in dem das Verbindungsteil (409) eine Translationsbewegung durchführen kann.

13. Rotorkopf nach Anspruch 12, dadurch gekennzeichnet, daß:
- die beiden äußeren Flansche (412, 416) und der Mittelflansch (414) jeweils von zwei Segmenten gebildet sind die eine allgemeine Form von Ringsegmenten aufweisen;
- die beiden Zwischenflansche (413, 415) eine allgemeine Ringform aufweisen;
- die viskoelastischen Schichten (417) jeweils von zwei Segmenten gebildet sind, die eine allgemeine Form von Ringsegmenten aufweisen.

14. Rotorkopf nach einem der Ansprüche 12 und 13, dadurch gekennzeichnet, daß:
- die beiden äußeren Flansche (412, 416) und der Mittelflansch (414) mit den beiden Platten (206a, 206b) des Befestigungsteils (102) durch sechs Bolzen (422) fest verbunden sind, die in gleicher Anzahl auf beiden Seiten der Schwenkachse (411) angeordnet sind, wobei diese Bolzen (422) in Bohrungen (424), die in jedem der äußeren Flansche (412, 416) und in dem Mittelflansch (414) angeordnet sind, sowie in Bohrungen (425) eingreifen, die in Querstreben (423) angeordnet sind, die in Zweiergruppen für jeden Bolzen (422) angeordnet sind, wobei eine dieser Querstreben (423) zwischen dem Mittelflansch (414) und einen, der äußeren Flansche (412) angeordnet ist und die andere Querstrebe (423) zwischen dem Mittelflansch (414) und dem anderen äußeren Flansch (416) angeordnet ist;
- die Querstreben (423) eine etwas geringere Länge als der Abstand im freien Zustand zwischen dem Mittelflansch (414) und dem entsprechenden äußeren Flansch (412, 416) aufweisen, so daß nach der Feststellung der Bolzen (422) eine leichte Spannung der viskoelastischen Schichten (417) besteht.

15. Rotorkopf nach einem der Ansprüche 12 bis 14, dadurch gekennzeichnet, daß das Verbindungsteil (409) ein Bügel ist:
- dessen beide Schenkel (410) teilweise den drehbaren, viskoelastischen Dämpfer (403) umgeben und dessen Schenkelenden um die Schwenkachse (411) gelenkig angeordnet sind;
- dessen Fußplatte (408) eine Stange (212) trägt, die in einer komplementären Bohrung gleiten kann, die in dem Kugelgelenk (213), das in der Nahe (101) montiert ist, angeordnet ist.

16. Rotorkopf nach Anspruch 15, dadurch gekennzeichnet, daß der Bügel (409) an jedem Schenkelende (410) ein Kugelgelenk (420, 421) umfaßt, in dem ein Gelenk montiert ist, so daß ein leichtes Ausscheren der Schenkel (410) in bezug zu deren Schwenkachse (411) ermöglicht ist, um die Schrittbewegungen des Befestigungsteils (102) des Rotorblattes zu begleiten.

17. Rotorkopf nach Anspruch 16, dadurch gekennzeichnet, daß jede Schwenkachse (411) des Schenkels (410) des Bügels (409) von einem Bolzen (418, 419) gebildet ist, auf dem das entsprechende Kugelgelenk (420, 421) montiert ist, wobei der Bolzen in einer Stütze (428) montiert ist, die zwischen den beiden Zwischenflanschen (413, 415) angeordnet und auf den beiden Zwischenflanschen durch zwei Bolzen (429) befestigt ist.
